# EUROPÄISCHE PATENTSCHRIFT

(11) **EP 1 483 200 B1**
(45) Veröffentlichungstag und Bekanntmachung des Hinweises auf die Patenterteilung: **13.07.2005**
(21) Anmeldenummer: 03714742.8
(22) Anmeldetag: 15.02.2003
(51) Int. Cl.: C01B 21/40

(54) **VERFAHREN ZUR HERSTELLUNG VON SALPETERSÄURE**
METHOD FOR THE PRODUCTION OF NITRIC ACID
PROCEDE DE PRODUCTION D'ACIDE NITRIQUE

(30) Priorität: 22.02.2002 DE 10207627
(43) Veröffentlichungstag der Anmeldung: 08.12.2004
(73) Patentinhaber: Uhde GmbH, 44141 Dortmund (DE)
(72) Erfinder: DZIOBEK, Frank, 45470 Mühlheim/Ruhr (DE); CLAES, Detlev, 44801 Bochum (DE); JOHANNING, Joachim, 46045 Oberhausen (DE); MAURER, Rainer, 58332 Schwelm (DE); SZONN, Erich, 58454 Witten (DE)
(86) Internationale Anmeldenummer: PCT/EP2003/001538
(87) Internationale Veröffentlichungsnummer: WO 2003/070634

(56) Entgegenhaltungen:
- EP-A- 0 154 470
- EP-A- 0 945 400
- WO-A-01/68520
- DE-A- 1 911 200
- DE-A- 2 002 791
- US-A- 4 263 267

## Beschreibung

Die Erfindung bezieht sich auf ein besonders wirtschaftliches Verfahren zur Herstellung von ca. 50 bis 76 prozentiger Salpetersäure durch Verbrennung von Ammoniak mit einem sauerstoffhaltigen Gas, insbesondere Luft, unter Druck mit gleichzeitiger Ausnutzung der Reaktionswärme für die Gewinnung von Nutzenergie, weiche In Form von Dampf oder elektrischer Energie bereitgestellt wird.

Die Herstellung von Salpetersäure im Bereich von 50 bis 76 prozentiger Konzentration geschieht üblicherweise in Anlagen nach dem Ostwald-Prozess, wie sie z.B. in der Publikation "Anorganische Stickstoffverbindungen" von Mundo/Weber, Carl Hanser Verlag München Wien 1982, einem Sonderdruck aus "Winnacker/Küchler, Chemische Technologie, Band 2; Anorganische Technologie I, 4. Auflage" sowie in der WO 01/68520 A1 beschrieben werden.

Hiernach wird zwischen Eindruck- und Zweidruckverfahren unterschieden: Bei Eindruckverfahren wird zunächst die Luft auf einen mittleren (ca. 5 bar) oder hohen Druck (ca.12bar) komprimiert, dann unter Druck befindliches Ammoniak hinzugemischt und die Mischung dann katalytisch verbrannt. Nach der Abkühlung wird das gebildete Stickoxid mit verdichteter Sekundärluft versehen und in wässriger Lösung absorbiert, wobei sich Salpetersäure bildet. Das restliche Gas, im folgenden als Restgas bezeichnet, wird gereinigt, entspannt und in die Atmosphäre gegeben.

Bei Zweidruckverfahren findet nach der katalytischen Verbrennung und der anschließenden Abkühlung eine weitere Verdichtung statt, um die Absorption bei einem höheren Druck als die Verbrennung betreiben zu können.

Sowohl die ein- oder mehrstufige Verdichtung des Einsatzgases, in der Regel Luft, als auch die Entspannung des Restgases werden üblicherweise mittels Turboverdichtern bzw. Turboexpandern durchgeführt, welche alle untereinander leistungsgekoppelt arbeiten, wobei unterschiedliche Drehzahlen durch Getriebe ausgeglichen werden. Da die bei der Entspannung gewonnene Arbeit normalerweise nicht für den Betrieb der Verdichtung des Einsatzgases ausreicht, wird zusätzliche Antriebsenergie benötigt.

Nach dem Stand der Technik wird zur Bereitstellung dieser zusätzlichen Antriebsenergie entweder ein elektrischer Antrieb oder eine energetisch optimierte Dampfturbine eingesetzt, welche mit Anteilen des Dampfes betrieben wird, der bei der Abkühlung des stickoxidreichen Gases nach der katalytischen Verbrennung in dampferzeugenden Einrichtungen gewonnen wird. Dieser Hilfsantrieb wird auch zum Starten des Prozesses eingesetzt und gilt bei Fachleuten als unverzichtbar.

Nachteilig ist jedoch der Dampfverbrauch der Dampfturbine, der etwa ein Drittel bis zur Hälfte der Gesamtdampfproduktion ausmacht. Dies gilt insbesondere dann, wenn der erzeugte Dampf anderweitig genutzt werden kann, etwa im Rahmen einer Anlage zur Konzentrierung von Salpetersäure oder zur Verstromung oder zu Heiz- oder anderen Zwecken, falls sich die Anlage zur Herstellung von Salpetersäure innerhalb eines größeren Anlagenkomplexes befindet. Will man jedoch auf eine Dampfturbine als Hilfsantrieb verzichten, muss die Leistung des Restgasexpanders so weit gesteigert werden, dass seine Leistungsabgabe der Leistungsaufnahme der Verdichter entspricht. Dies führt bei Einsatz der Technologie, wie sie dem herkömmlichen Stand der Technik entspricht, zu kaum überwindbaren Schwierigkeiten.

Die Aufgabe der Erfindung besteht daher darin, eine Salpetersäureanlage derart zu gestalten, dass mehr hochwertige Nutzenergie In Form von Prozessdampf oder elektrischer Energie an externe Verbraucher abgeführt werden kann. Weiterhin soll entweder auf den regulären Betrieb einer Dampfturbine verzichtet und die eingesparte Dampfmenge zur anderweitigen Verwertung zur Verfügung gestellt werden können oder der reguläre Betrieb der Dampfturbine soll im wesentlichen der Stromerzeugung dienen und nicht als Verdichterantrieb. Weiterhin soll eine Möglichkeit geschaffen werden, in wirtschaftlicher Weise ganz auf eine Dampfturbine verzichten zu können.

Die Erfindung löst die Aufgabe dadurch, dass
- die Expansion des Restgases unter Gewinnung von Arbeit in mindestens zwei Stufen erfolgt, .
- wobei zwischen je zwei Expansionsstufen mindestens eine Einrichtung zur Aufheizung des zuvor entspannten Restgases auf eine Temperatur von über 450 °C angeordnet ist, welche Abwärme aus dem Herstellungsprozess von Salpetersäure verwendet.

Überraschenderweise zeigte sich, dass die so in den Turboexpandern gewinnbare Arbeit genau ausreicht, um den bzw. die Turboverdichter anzutreiben. Dies ist insofern erstaunlich, da die Aufteilung einer Expansionsstufe in mehrere Expansionsstufen zwangsläufig mit einer Verminderung des thermischen Gesamtwirkungsgrades eben dieser Expansion verbunden ist, insbesondere dann, wenn noch eine Zwischenaufheizung erfolgt. Dies folgt aus den thermodynamischen Gesetzmäßigkeiten des offenen Gasturbinenprozesses, im Folgenden als Joule-Prozess bezeichnet, der durch nacheinander angeordnete adiabate Verdichtung, isobare Wärmezufuhr, adiabate Entspannung und isobare Wärmeabfuhr durch Ausstoß der Abgase gekennzeichnet ist.

Die wichtigste Kenngröße im Joule-Prozess ist der thermische Wirkungsgrad η, der bei Wärmekraftmaschinen die Leistung P mit dem zugeführten Wärmestrom Q ins Verhältnis setzt: η = P / Q. Für ein gegebenes Gas besteht im idealen Joule-Prozess für den thermischen Wirkungsgrad lediglich eine Abhängigkeit vom Verhältnis des Druckes vor der Verdichtung zu dem nach der Verdichtung. Hier gilt: η =1 - (p₁/p₂)ⁿ mit n = 1 - 1/κ, (κ = Isentropenexponent), p₁ ist dabei der Anfangsdruck und p₂ der Enddruck. Der thermische Wirkungsgrad ist hier unabhängig von der zugeführten Wärmemenge.

Teilt man die Expansion jedoch in zwei Stufen auf und führt zwischen jeweils Wärme zu, so kann sich der thermische Wirkungsgrad insgesamt nur verringern. Betrachtet man nämlich einen thermodynamischen Kreisprozess, bei dem zwischen den Drücken p₁ und p₂ ein Druck pₘ eingestellt wird, bei welchem ein Teil der Wärme zugeführt wird, so gilt nur noch für die erste Expansionsstufe η =1 - (p₁/p₂)ⁿ, für die zweite Expansionsstufe gilt η = 1 - (p₁/pₘ)ⁿ, wobei p₁/pₘ größer als p₁/p₂ ist. Dieses geringere Druckverhältnis für die zweite Expansionsstufe bewirkt also einen geringeren thermischen Wirkungsgrad der zweiten Expansionsstufe im Vergleich zur ersten Expansionsstufe. Somit gilt auch für jede Summe, dass der Gesamtwirkungsgrad abnehmen muss. Das gleiche gilt analog auch für jede mehrstufige Expansion.

Da der Herstellungsprozess für Salpetersäure durch einen solchen Kreisprozess näherungsweise darstellbar ist - die Wärmezufuhr erfolgt hier durch das Freiwerden der Reaktionsenthalpie sowie mittels Wärmeverschiebungssystemen - folgt für den Fachmann, dass die Aufteilung der Expansion in mehrere Stufen mit Zwischenaufheizung eigentlich dazu führen müsste, dass der thermische Gesamtwirkungsgrad sinkt und somit auch der Anteil der auskoppelbaren Wärme, der in Antriebsenergie umwandelbar ist. Es bestand daher das Vorurteil, dass durch mehrstufige Expansion insgesamt nicht mehr Antriebsenergie als durch einstufige Expansion bereitgestellt werden könne.

im Falle des Herstellungsprozesses für Salpetersäure zeigte sich jedoch, dass die thermodynamisch bedingte Verringerung des Expander-Wirkungsgrades keine Auswirkungen auf den thermischen Gesamtwirkungsgrad der Anlage hat. Gegenüber einer einstufigen Expansion weist eine zweistufige Expansion bei gleicher Gesamtwärmezufuhr zum Restgas zwar eine höhere Restgastemperatur hinter der letzten Expansionsstufe auf, aber die Wärme dieses Restgases wird aufgrund dieser höheren Temperatur in einer Salpetersäureanlage nutzbar und kann verwertet werden. Auf diese Weise wird die zu erwartende Verringerung des Gesamtwirkungsgrades dadurch überkompensiert, dass ein deutlich größerer Anteil an Abwärme nutzbar wird. Dieser musste zuvor in die Atmosphäre geleitet werden, weil er sich auf einem solch niedrigen Temperaturniveau befand, dass er nicht wirtschaftlich nutzbar war.

Ferner zeigte sich, dass über den Eigenbedarf der Verdichtungsantriebe hinaus von den Expansionsstufen auch mechanische Überschussenergie erzeugt werden kann, wenn die Temperatur, mit der das Restgas in die Expansionsstufen geleitet wird, höher als 450 °C eingestellt wird, insbesondere im Bereich zwischen 500 °C und 600 °C. Als besonders wirtschaftlich stellte sich eine Temperatur von 535 °C heraus, sofern der Überschuss an Antriebsenergie zur Erzeugung elektrischer Energie benutzt werden soll. Die wirtschaftlich optimale Temperatur hängt jedoch in vielfältiger Weise von den speziell vorliegenden Bedingungen ab und muss im jeweiligen Einzelfall ermittelt werden. Insbesondere kann die mechanische Energie außer zur Stromerzeugung auch zum Antrieb einer Kältemaschine oder anderer Verbraucher genutzt werden. Mit dem spezifischen Bedarf solcher zusätzlicher Verbraucher ändert sich auch die erforderliche Gaseintrittstemperatur der jeweiligen Expansionsstufen, wobei die Gaseintrittstemperaturen in den verschiedenen Expansionsstufen durchaus auch verschieden sein können.

In einer Ausgestaltung der Erfindung beträgt daher die Gaseintrittstemperatur der Expansionsstufen zwischen 500 °C und 600 °C, bevorzugt 535 °C, wobei Antriebsenergie an weitere Verbraucher abgegeben wird.

In einer weiteren Ausgestaltung der Erfindung ist vorgesehen, dass mit der überschüssigen Antriebsenergie ein Generator zur Erzeugung elektrischer Energie angetrieben wird. Besonders bevorzugt wird hierzu ein Motorgenerator eingesetzt, der aufgrund seiner Leistung auch allein in der Lage ist, die Verdichtung beim Starten der Anlage durchzuführen. Auf diese Weise wird der Einsatz einer Dampfturbine unnötig.

Sollte eine Dampfturbine schon vorhanden sein, etwa im Falle einer Nachrüstung einer bestehenden Anlage nach dem herkömmlichen Stand der Technik, besteht auch die Möglichkeit, die Dampfturbine zusätzlich zur Erzeugung elektrischer Energie einzusetzen und auf diese Weise eine deutliche Vergrößerung der elektrischen Energieproduktion zu erreichen.

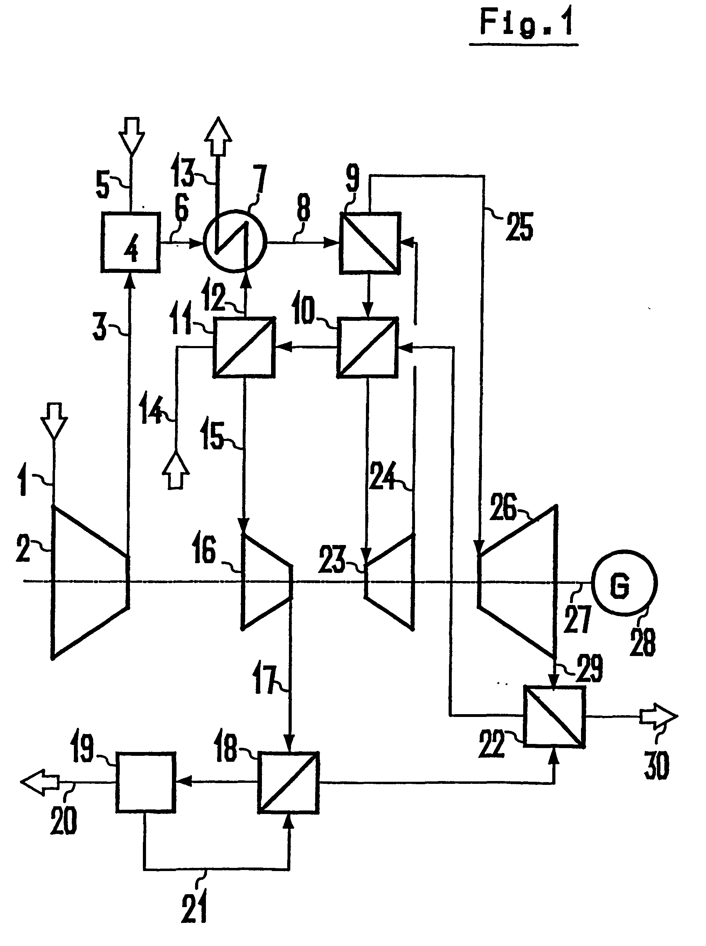

Die Erfindung wird im Folgenden anhand eines Beispiels verdeutlicht Gezeigt wird in Fig. 1 ein Blockfließbild einer Anlage zur Erzeugung von 68-prozentiger Salpetersäure nach dem Zweidruckverfahren, mit den wesentlichen Elementen Verdichtung, Verbrennung, Dampfgewinnung, Absorption und der erfindungsgemäßen, in diesem Beispiel zweistufigen Restgasexpansion, sowie den entsprechenden internen Wärmeverschlebungseinrichtungen und der Nutzung von Überschussenergie. Nicht dargestellt sind Einrichtungen zur Gasreinigung, Filterung, Temperatur-Feineinstellung, Regelung sowie Sekundärluftzugabe oder dergleichen.

Luft 1 wird in der Vorverdichtung 2 verdichtet und ein Teil davon wird als Verbrennungsluft 3 in der katalytischen Verbrennung 4 zusammen mit Ammoniak 5 verbrannt, wobei ein NO-reiches Gas 6 entsteht, welches eine Temperatur von ca. 900 °C aufweist. Dieses NO-reiche Gas 6 wird zunächst im Teilverdampfer/ Überhitzer 7 leicht abgekühlt, das NO-reiche Gas 8 wird danach in den Gas-Gas-Wärmetauschem 9 und 10 zum Aufheizen des Restgases (siehe unten) genutzt, und schließlich im Tellverdampfer / Economizer 11 abgekühlt. Im Tellverdampfer / Economizer 11 wird aus Speisewasser 14 zunächst ein Gemisch aus aus Wasser / Dampf 12 erzeugt, woraus dann im Teilverdampfer / Überhitzer 7 überhitzter Dampf 13 gewonnen wird. Das abgekühlte NO-Gas 15 wird in der NO-Verdichtung 16 nachverdichtet. Das nachverdichtete NO-Gas 17 wird im Gas-Gas-Wärmetauscher 18 gekühlt und in der Absorption 19 zu Salpetersäure 20 umgesetzt.

Das von Stickoxiden weitgehend befreite Restgas 21 wird daraufhin in den Gas-Gas-Wärmetauschern 18, 22 und 10 auf 535 °C aufgeheizt und in die erste Expansionsstufe 23 geleitet, wo es unter Abgabe von Antriebsenergie auf einen geeigneten Druck teilentspannt wird. Hierbei kühlt sich das Restgas ab. Die dabei in Antriebsenergie umgesetzte Wärme des Restgases 24 wird daraufhin im Gas-Gas-Wärmetauscher 9 ersetzt, wobei das wiederaufgeheizte Restgas 25 mit 535 °C in die zweite Expansionsstufe 26 strömt, wo es unter Abgabe von Antriebsenergie auf Umgebungsdruck entspannt wird. Das entspannte Restgas 29 wird im Gas-Gas-Wärmetauscher 22 nachgekühlt und in die Atmosphäre 30 gegeben, wobei selbstverständlich zwischen den einzelnen Schritten verschiedene, hier nicht dargestellte Maßnahmen zur Gasreinigung angeordnet werden können und sollen.

Die Verdichtungsstufen Vorverdichtung 2 und NO-Verdichtung 16 sowie die Expansionsstufen 23 und 26 werden bevorzugt auf einer Antriebswelle 27 angeordnet, gegebenenfalls auch mit Getrieben miteinander verbunden, wobei diese Antriebswelle 27 die in den Expansionsstufen gewonnene Antriebsenergie den Verdichtungsstufen zur Verfügung stellt. Die Anordnung der Verdichtungs- und Expansionsstufen auf dieser Antriebswelle 27 ist dabei nicht auf die der in Fig. 1 gewählten Darstellung beschränkt, sondern kann auch anders gewählt werden. Die Überschussenergie wird dabei einem Generator 28 zugeführt, der daraus elektrische Energie erzeugt, die ebenso wie der erzeugte Dampf 13 an externe Verbraucher abgegeben werden kann.

Eine Übersicht Ober die einzelnen Energiemengen in einem günstigen Betriebsfall ohne Gewinnung elektrischer Energie gibt die folgende Tabelle, wobei sich die Energiemengen auf jeweils eine Tonne erzeugte Salpetersäure beziehen (kWh pro t HNO₃), und negative Werte auf aufgenommene und positive auf abgegebene Energie verweisen:

| Salpetersäureanlage | herkömmliche Bauweise | Vorliegende ERFINDUNG |
|---|---|---|
| 1150 tato HNO₃ (100%) | einstufige Entspannung | mehrstufige Entspannung |
| | | |
| t-Eintritt Expander | 430 °C | 535 °C |
| Verdichtungsarbeit | -386.1 KWh/t HNO3 | -386.1 KWh / t HNO3 |
| Expanderarbeit | 285.9 KWh/t HNO3 | 386.1 KWh/t HNO3 |
| Hilfsantrieb | 100.2 KWh/t HNO3 | entfällt |
| Energleexport | 200 KWh/t HNO3 | 250 KWh/t HNO3 |

### Bezugszeichenliste

- 1: Luft
- 2: Vorverdichtung
- 3: Verbrennungsluft
- 4: katalytische Verbrennung
- 5: Ammoniak
- 6: NO-reiches Gas
- 7: Teilverdampfer / Überhitzer
- 8: NO-reiches Gas
- 9: Gas-Gas-Wärmetauscher
- 10: Gas-Gas-Wärmetauscher
- 11: Teilverdampfer / Economizer
- 12: Wasser / Dampf
- 13: überhitzter Dampf
- 14: Speisewasser
- 15: abgekühltes NO-Gas
- 16: NO-Verdichtung
- 17: nachverdichtetes NO-Gas
- 18: Gas-Gas-Wärmetauscher
- 19: Absorption
- 20: Salpetersäure
- 21: Restgas
- 22: Gas-Gas-Wärmetauscher
- 23: erste Expansionsstufe
- 24: teilentspanntes Restgas
- 25: wiederaufgeheiztes Restgas
- 26: zweite Expansionsstufe
- 27: Antriebswelle
- 28: Generator
- 29: entspanntes Restgas
- 30: Atmosphäre

## Patentansprüche

1. Verfahren zur Herstellung von Salpetersäure einer Konzentration zwischen 50 und 76 % aus Ammoniak und sauerstoffhaltigem Gas unter Druck nach dem Eindruck- oder Zweidruckverfahren, **dadurch gekennzeichnet, dass**
• die Expansion des Restgases unter Gewinnung von Arbeit in mindestens zwei Stufen erfolgt,
• wobei zwischen je zwei Expansionsstufen mindestens eine Einrichtung zur Aufheizung des zuvor entspannten Restgases auf eine Temperatur von über 450 °C angeordnet ist, welche Abwärme aus dem Herstellungsprozess von Salpetersäure verwendet.

2. Verfahren nach Anspruch 1, **dadurch gekennzeichnet, dass** die Gaseintrittstemperatur der Expansionsstufen zwischen 500 °C und 600 °C, und bevorzugt 535 °C beträgt und Antriebsenergie an weitere Verbraucher abgegeben wird.

3. Verfahren nach einem der vorangegangenen Ansprüche, **dadurch gekennzeichnet, dass** mit der überschüssigen Antriebsenergie ein Generator zur Erzeugung elektrischer Energie angetrieben wird.

4. Verfahren nach Anspruch 3, **dadurch gekennzeichnet, dass** ein Motorgenerator eingesetzt wird, der aufgrund seiner Leistung in der Lage ist, die Verdichtungsarbeit beim Neustart der Anlage allein durchzuführen.

## Claims

1. Process for the production of nitric acid with a concentration of 50 to 76 % from ammonia and oxygen-bearing gas under pressure, using the mono or dual pressure process, **characterised in that**
• the expansion of the tail gas takes place in at least two steps, thereby converting gas to energy,
• the said configuration provides for a device arranged between each pair of expansion units and intended for heating the expanded tail gas to a temperature of >450°C, the said system exploiting the waste heat from the nitric acid production process.

2. Process according to claim No. 1,
**characterised in that** the invention provides for a gas temperature of 500 to 600°C, preferably 535°C, at the inlet of the expansion steps, thereby supplying drive energy to further consumers.

3. Process according to one of the preceding claims,
**characterised in that** the surplus drive energy is used to drive a generator in order to produce electric power.

4. Process according to claim 3,
**characterised in that** a motor-generator set is used because the output of said machine is sufficient to ensure the compression required for the plant start-up.

## Revendications

1. Procédé pour la production d'acide nitrique à une concentration de 50 à 76 %, à partir d'ammonic et de gaz à teneur en oxygène sous pression, mettant en oeuvre le procédé à pression bi-étagé, **caractérisé en ce que**
• la détente du gaz résiduaire a lieu de manière au moins bi-étagée, de telle sorte que le gaz résiduaire soit converti en énergie,
• la dite configuration dispose au minimum d'un dispositif intercalé entre les deux étages de détente et destiné à rechauffer à plus de 450°C le gaz résiduaire détendu au préalable, et qu'elle met en oeuvre la chaleur provenant du procédé de production d'acide nitrique.

2. Procédé selon la revendiation No. 1,
**caractérisé en ce que** la température du gaz à l'entrée des deux étages de détente est de 500 à 600°C, de préférence 535°C, et que de l'énergie est fournie à d'autres consommateurs.

3. Procédé selon l'une des revendications précédentes,
**caractérisé en ce que** l'énergie d'entraînement excédentaire permet de commander un générateur/alternateur pour la production d'énergie électrique.

4. Procédé selon la revendication No. 3,
**caractérisé en ce qu'**un groupe moto-générateur est utilisé puisque sa puissance est suffisante pour fournir l'énergie de compression nécessaire lors du redémarrage de l'installation.
